**Europäisches Patentamt**

**European Patent Office**

**Office européen des brevets**

(19)

(11) Veröffentlichungsnummer : **0 335 178 B1**

## (12) EUROPÄISCHE PATENTSCHRIFT

(45) Veröffentlichungstag der Patentschrift :
**20.05.92 Patentblatt 92/21**

(21) Anmeldenummer : **89104626.0**

(22) Anmeldetag : **15.03.89**

(51) Int. Cl.$^5$ : **G01G 21/22,** G01G 21/30

(54) **Oberschalige Präzisionswaage.**

(30) Priorität : **26.03.88 DE 3810469**

(43) Veröffentlichungstag der Anmeldung :
**04.10.89 Patentblatt 89/40**

(45) Bekanntmachung des Hinweises auf die
Patenterteilung :
**20.05.92 Patentblatt 92/21**

(84) Benannte Vertragsstaaten :
**ES IT**

(56) Entgegenhaltungen :
**EP-A- 0 035 579**
**EP-A- 0 065 820**
**DE-U- 8 505 720**
**FR-A- 2 486 649**

(73) Patentinhaber : **SARTORIUS AG**
**Weender Landstrasse 94-108**
**W-3400 Göttingen (DE)**

(72) Erfinder : **Knothe, Erich**
**Hasenwinkel 4**
**W-3406 Eddigehausen (DE)**
Erfinder : **Melcher, Franz-Josef**
**Rosenstrasse 18**
**W-3414 Hardegsen 3 (DE)**

(74) Vertreter : **Köhler, Rudolf**
**c/o Sartorius AG Weender Landstrasse 94-108**
**W-3400 Göttingen (DE)**

## Beschreibung

Die Erfindung betrifft eine oberschalige Präzisionswaage nach dem Oberbegriff der Ansprüche 1, 2. Solche Waagen sind z.B. bekannt durch das deutsche Gebrauchsmuster G 85 05 720, bei der das Eindringen von Fremdkörpern in das Meßsystem dadurch verhindert wird, daß der berührungsfrei durch eine Gehäuseöffnung hindurchgeführte Waagschalenträger von einer Membran umschlossen ist, die den Freiraum zwischen Waagschalenzapfen und Gehäuseöffnung überbrückt. Die Membran in Form eines dünnen Kunststoffhäutchens soll einerseits eine ausreichende Eigenfestigkeit haben, um Spritzwasser, aggressive Medien oder Fremdkörper abzuweisen andererseits aber bei hochauflösenden Präzisionswaagen möglichst dünn und damit möglichst rückstellungsfrei sein, um nicht das Wägeergebnis zu verfälschen. Die einander widersprechenden Forderungen führen dazu, daß die Dichtigkeit der Membran selbst bzw. an ihren Verbindungsstellen mit dem Gehäuse und dem Waagschalenzapfen im Laufe der Zeit unter dem Einfluß von mechanischer Belastung, aggressiver Medien und Temperaturunterschiede nachläßt und Feuchtigkeit, insbesondere Spritzwasser in das empfindliche elektronische Meßsystem eindringt und da die Membran an hochliegender Stelle angeordnet ist, die eingedrungene Flüssigkeit keine Möglichkeit hat, das gekapselte System zu verlassen.

Ähnliche Nachteile weist eine andere bekannte Waage auf (EP-A-35 579), bei der der bewegliche Lastträger die Form eines geschlossenen Parallelepipeds hat und die das Wägesystem tragende Bodenplatte mit umschließt. Diese stützt sich über drei Füße ab, und die ringförmigen Öffnungen zwischen Stützfüßen und der Bodenplatte des Lastträgers sind durch Gummimanschetten oder Gummimembranen verschlossen. Um das Wägeergebnis bei kleinen Höchstlasten nicht zu verfälschen, muß das gekapselte Wägesystem zusätzlich durch Druckausgleichsmittel wie poröse Wandabschnitte oder elastische Bälge ergänzt werden.

Der Erfindung liegt daher die Aufgabe zugrunde, mit einfachen konstruktiven Mitteln die Forderungen nach Sicherung des Meßsystems gegen das Eindringen von Fremdkörpern und Spritzwasser zu erfüllen, ohne dabei die gegebenen Möglichkeiten des Meßsystems für hohe Auflösung zu beeinträchtigen.

Diese Aufgabe wird erfindungsgemäß dadurch gelöst, daß der Waagschalenträger seinerseits mit seinem berührungsfrei durch die Öffnung nach oben außerhalb des Systemgehäuses geführten Teil als das Systemgehäuse zumindest oberseitig und seitlich abdeckende Schutzhaube ausgebildet ist, welche am tiefliegenden Haubenrand Aufnahmelager für die Waagschale abstützende Zwischenglieder aufweist und diese sind berührungsfrei von nach oben und unten offenen Spritzwasser- und Fremdkörperschikane bildenden Hülsen umschlossen, welche Bestandteil eines das Systemgehäuse mit umschließenden Gesamtgehäuses sind und dieses weist in tiefgelegenen Bodenteilen Drainageöffnungen auf.

In einer anderen Ausführungsform geht der Waagschalenträger seinerseits mit seinem nach unten berührungsfrei durch die Öffnung außerhalb des Systemgehäuses geführten Teil in seitlich sich erstreckende Arme über, welche in Aufnahmelager für die Waagschale abstützende Zwischenglieder enden und diese sind ebenfalls berührungsfrei von nach oben und unten offenen Spritzwasser- und Fremdkörperschikane bildenden Hülsen umschlossen, welche Bestandteil eines das Systemgehäuse mit umschließenden Gesamtgehäuses sind, welches in tiefgelegenen Bodenteilen Drainageöffnungen aufweist.

Durch diesen erfindungsgemäßen Aufbau kommt die Waage ohne Schutzmembranen aus, die die freie Bewegung des Lastaufnehmers beeinflussen und das Wägeergebnis verfälschen können.

Vorteilhafte Weiterbildungen sind in den abhängigenansprüchen angegeben.

Die Erfindung ist in zwei Ausführungsbeispielen anhand der beiliegenden Zeichnung näher erläutert. Dabei zeigt:

Fig. 1 einen schematischen Vertikalschnitt durch ein bevorzugtes Ausführungsbeispiel und

Fig. 2 in entsprechender Darstellung eine Variante zu Fig. 1.

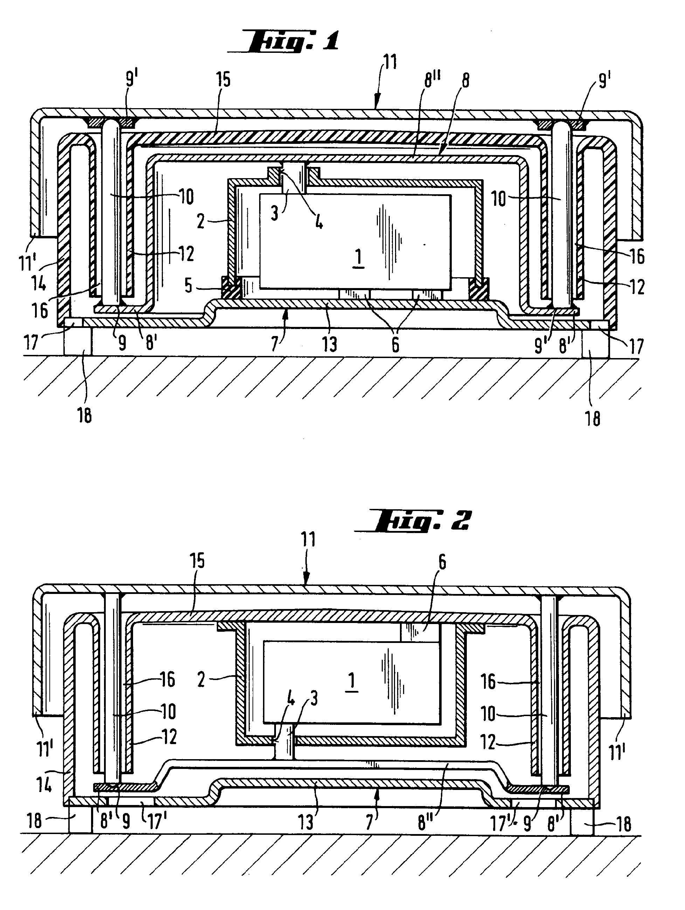

Gemäß Fig. 1 ist ein wegarmes Meßsystem 1 z.B. nach dem Prinzip der elektromagnetischen Kraftkompensation oder mit schwingender Saite oder mit Stimmgabel-Resonator oder Dehnungsmeßstreifen hier nur schematisch angedeutet und gehört zum Stand der Technik. Dieses Meßsystem 1 ist an Festpunkten 6 einer Gehäusebasis 13 eines Gesamtgehäuses 7 festgelegt, während der bewegliche und parallel geführte Teil als eigentlicher Lastaufnehmer in einen Waagschalenträger 3 übergeht, der berührungsfrei die Gehäuseöffnung 4 eines Systemgehäuses 2 nach oben durchsetzt. Dieses Systemgehäuse 2, hier in Form einer Kappe, umschließt das eigentliche Meßsystem 1 und weitere elektronische Bauteile und ist mittels Dichtungen 5 an der Gehäusebasis 13 des umgebenden Gesamtgehäuses 7 befestigt.

Der Waagschalenträger 3 geht seinerseits in eine Schutzhaube 8 über, die mit ihrer Haubendecke 8″ und umlaufenden oder mit mindestens zwei gegenüberliegenden Seitenteilen und bedarfsweise auch weiteren Bodenteilen das Systemgehäuse 2 übergreift. Der Haubenrand 8′ weist möglichst tiefliegend angeordnete Aufnahmelager 9 für bolzenförmige Zwischenglieder 10 der Waagschale 11 auf, die hier als Plattform mit tief heruntergezogenem Rand 11′ ausgebildet ist und an den vier Eckbereichen je ein solches Zwischenglied 10 aufweist.

Die Zwischenglieder 10 sind nach Fig. 1 bei 8' angeschraubt oder angeschweißt und die Waagschale 11 greift mit Fixierlagern 9' über die Enden der Zwischenglieder 10.

Zur Bildung weiterer Schikanen gegen das Eindringen von Fremdkörpern und Spritzwasser in den Bereich der Gehäuseöffnung 4 sind die Zwischenglieder 10 berührungsfrei durch Hülsen 12 umgeben, die nach unten und oben Öffnungen aufweisen, wobei die Hülsen 12 oberseitig in die Gehäusedecke 15 eines das Systemgehäuse 2 umschließenden Gesamtgehäuses 7 integriert ist. Das haubenartige Gehäuseoberteil aus Gehäusedecke 15 und Seitenteilen 14 mit Hülsen 12 ist vorzugsweise einstückig als Kunststoffspritzteil ausgebildet und lösbar mit der Gehäusebasis 13 verbunden. Die auf Gehäusefüßen 18 ruhende Gehäusebasis 13 vorzugsweise aus Metall, ist dabei so ausgebildet, daß unmittelbar unter den Hülsen 12 und den Aufnahmelagern 9 oder seitlich in deren Nähe am Außenrand der Basisplatte 13 Drainageöffnungen 17, 17' an den tiefstliegenden Stellen der Gehäusebasis 13 angeordnet sind und ein Abfließen von Spritzwasser gewährleisten. Der Freiraum 16 zwischen Hülse 12 und Zwischenglied 10 ist so groß, daß Kapillareffekte in Verbindung mit Flüssigkeit ausgeschlossen werden.

In gleicher Weise ist die zwischen der Waagschale 11 und der Haubendecke 8″ im Zwischenraum verlaufende Gehäusedecke 15 nach der Peripherie hin schräg abfallend ausgeführt, so daß auch hier eventuell eindringendes Spritzwasser schnell abgeführt werden kann.

In der Ausführungsform nach Fig. 2 ist das Meßsystem 1 und das Systemgehäuse 2 an der Decke 15 des Gesamtgehäuses 7 befestigt. Der Waagschalenträger 3 geht nach unten und seitlich in eine Platte oder Arme 8″ über, die an ihrer Peripherie in den Aufnahmelagern 9 für die Zwischenglieder 10 der Waagschale 11 enden. In dieser Ausführungsform sind die Decke 15, die Seitenwände 14 und die Hülsen 12 zweckmäßig aus Metall gebildet, um ohne Verformung die Last aus der Waagschalenbelastung aufnehmen zu können.

Durch den Wegfall jeglicher Dichtungsmembranen und Gewährleistung eines Druckausgleiches über die Öffnungen 17, 17' und 4 ist dieses Bauprinzip auch für hochauflösende Präzisionswaagen geeignet.

## Patentansprüche

1. Gegen das Eindringen von Fremdkörpern und Spritzwasser geschützte oberschalige elektronische Präzisionswaage mit einem wegarmen Meßsystem (1), einem parallel geführten Waagschalenträger (3) für eine Waagschale (11), welcher durch eine Gehäuseöffnung (4) eines umgebenden Systemsgehäuses (2) oder Schutzkappe geführt ist, dadurch gekennzeichnet, daß der Waagschalenträger (3) seinerseits mit seinem berührungsfrei durch die Öffnung (4) nach oben außerhalb des Systemgehäuses (2) geführten Teil als das Systemgehäuse (2) zumindest oberseitig und seitlich abdeckende Schutzhaube (8) ausgebildet ist, welche am tiefgelegenen Haubenrand (8') Aufnahmelager (9) für die Waagschale (11) abstützende Zwischenglieder (10) aufweist und diese berührungsfrei von nach oben und unten offenen Spritzwasser- und Fremdkörperschikane bildenden Hülsen (12) umschlossen sind, welche Bestandteil eines das Systemgehäuse (2) mitumschließenden Gesamtgehäuses (7) sind und dieses in tiefgelegenen Bodenteilen Drainageöffnungen (17,17') aufweist.

2. Gegen das Eindringen von Fremdkörpern und Spritzwasser geschützte oberschalige elektronische Präzisionswaage mit einem wegarmen Meßsystem (1), einem parallel geführten Waagschalenträger (3) für eine Waagschale (11), welcher durch eine Gehäuseöffnung (4) eines umgebenden Systemsgehäuses (2) oder Schutzkappe geführt ist, dadurch gekennzeichnet, daß der Waagschalenträger (3) seinerseits mit seinem nach unten berührungsfrei durch die Öffnung (4) außerhalb des Systemgehäuses (2) geführten Teil in seitlich sich erstreckende Arme (8″) übergeht, welche in Aufnahmelager (9) für die Waagschale (11) abstützende Zwischenglieder (10) enden und diese berührungsfrei von nach oben und unten offenen Spritzwasser- und Fremdkörperschikane bildenden Hülsen (12) umschlossen sind, welche Bestandteil eines das Systemgehäuse (2) mit umschließenden Gesamtgehäuses (7) sind und dieses in tiefgelegenen Bodenteilen Drainageöffnungen (17,17') aufweist.

3. Oberschalige Präzisionswaage nach Anspruch 1 oder 2, dadurch gekennzeichnet, daß die Drainageöffnungen (17) am Außenrand des Bodenteiles (13) des Gesamtgehäuses (7) angeordnet sind.

4. Oberschalige Präzisionswaage nach Anspruch 1 oder 2, dadurch gekennzeichnet, daß die Drainageöffnungen (17') unmittelbar unter den Hülsen (12) und Aufnahmelagern (9) für die Waagschale (11) angeordnet sind.

5. Oberschalige Präzisionswaage nach einem der Ansprüche 1 bis 4, dadurch gekennzeichnet, daß die Decke (15) des Gesamtgehäuses (7) nach der Peripherie hin schräg abfallend ausgebildet ist.

6. Oberschalige Präzisionswaage nach einem der Ansprüche 1 bis 5, dadurch gekennzeichnet, daß die Waagschale (11) als Plattform ausgebildet und mindestens über drei bolzenförmige Zwischenglieder (10) an den Aufnahmelagern (9) des Waagschalenträgers (3,8) angreift bzw. sich über mindestens drei Aufnahmelager (9') auf bolzenförmigen Zwischengliedern (10) des Waagschalenträgers (3,8) abstützt.

7. Oberschalige Präzisionswaage nach einem der Ansprüche 1 bis 6, <u>dadurch gekennzeichnet</u>, daß die Hülsen (12) Bestandteil der Gehäusedecke (15) und den Seitenwänden (14) sind und gemeinsam ein einstückiges Kunststoffspritzteil (12,14, 15) bilden, dessen Seitenwände (14) sich auf der Basisplatte (13) abstützen.

## Claims

1. Upper pan electronic precision weighing machine protected against the ingress of foreign bodies and spray water and with a low travel measuring system (1) and a parallelly guided weighing pan carrier (3), which is led through a protective cap or a housing opening (4) of a surrounding system housing (2), for a weighing pan (11), characterised thereby that the weighing pan carrier (3) in its turn is constructed by its part, which is led contactlessly through the opening (4) upwardly out of the system housing (2), as a protective hood (8), which covers the system housing (2) at least at the top and laterally and at the lower hood rim (8′) has receptacle bearings (9) for the intermediate members (10) supporting the weighing pan (11), and these are contactlessly enclosed by upwardly and downwardly open sleeves (12), which form obstacles to spray water and foreign bodies and are components of an overall housing (7) also enclosing the system housing (2) and this has drainage openings (17, 17′) in lower base parts.

2. Upper pan electronic precision weighing machine protected against the ingress of foreign bodies and spray water and with a low travel measuring system (1) and a parallelly guided weighing pan carrier (3), which is led through a protective cap or a housing opening (4) of a surrounding system housing, for a weighing pan (11), characterised thereby, that the weighing pan carrier (3) in its turn passes over by its part, which is led contactlessly through the opening (4) downwardly out of the system housing (2), into laterally extending arms (8″), which end in receptacle bearings (9) for the intermediate members (10) supporting the weighing pan (11), and these are enclosed contactlessly by upwardly and downwardly open sleeves (12), which form obstacles to spray water and foreign bodies and are components of an overall housing (7) also enclosing the system housing (2) and this has drainage openings (17, 17′) in lower base parts.

3. Upper pan precision weighing machine according to claim 1 or 2, characterised thereby, that the drainage openings (17) are arranged at the outer edge of the base part (13) of the overall housing (7).

4. Upper pan precision weighing machine according to claim 1 or 2, characterised thereby that the drainage openings (17) are arranged immediately below the sleeves (12) and receptacle bearings (9) for the weighing pan (11).

5. Upper pan precision weighing machine according to one of claims 1 to 4, characterised thereby that the cover (15) of the overall housing (7) is constructed to be sloping down towards the periphery.

6. Upper pan precision weighing machine according to one of claims 1 to 5, characterised thereby that the weighing pan (11) is constructed as platform and engages by way of at least three pin-shaped intermediate members (10) at the receptacle bearings (9) of the weighing pan carrier (3, 8) or is supported by way of at least three receptacle bearings (9′) on pin-shaped intermediate members (10) of the weighing pan carrier (3, 8).

7. Upper pan precision weighing machine according to one of claims 1 to 6, characterised thereby that the sleeves (12) are components of the housing cover (15) and the side walls (14) and together form an integral synthetic material injection-moulded part (12, 14, 15), the side walls (14) of which are supported on the base plate (13).

## Revendications

1. Balance de précision électronique à plateau supérieur, protégée contre la pénétration de corps étrangers et les projections d'eau, comportant un système de mesure (1) à faible déplacement, un support (3) à mouvement parallèle pour un plateau de balance (11), lequel support est guidé à travers une ouverture (4) d'un boîtier (2) entourant le système ou d'un capot de protection, <u>caractérisée en ce que</u> le support (3) de plateau de balance est, de son côté, avec sa pièce guidée vers l'extérieur en traversant sans contact par l'ouverture (4) le haut du boîtier entourant le système (2), configuré comme une chape de protection (8) recouvrant, au-dessus et latéralement au moins, le boîtier de système (2), laquelle chape présente sur son bord bas (8′) des coussinets de logement (9) pour les pièces intermédiaires (10) soutenant le plateau de balance (11), tandis que celles-ci sont entourées sans contact de manchons (12) formant des chicanes, ouvertes vers le haut et vers le bas, contre les projections d'eau et les corps étrangers, ces manchons étant partie constituante d'une carcasse d'ensemble (7) entourant le boîtier de système (2), cette carcasse présentant en son fond des ouvertures de drainage (17, 17′).

2. Balance de précision électronique à plateau supérieur, protégée contre la pénétration de corps étrangers et les projections d'eau, comportant un système de mesure (1)à faible déplacement, un support (3) à mouvement parallèle pour un plateau de balance (11), lequel support est guidé à travers une ouverture (4) d'un boîtier (2) entourant le système ou d'un capot de protection, <u>caractérisée en ce que</u> le support (3) du plateau de balance, de son côté, avec sa pièce guidée vers l'extérieur en traversant sans contact par l'ouverture (4) le bas du boîtier (2) entourant le système, se transforme en des bras (8″) s'étendant latéralement, lesquels se terminent en coussinets de logement (9) pour les pièces intermédiaires (10) soutenant le plateau de balance (11), tandis que celles-ci sont entourées sans contact de manchons (12) formant des chicanes, ouvertes vers le haut et vers le bas, contre les projections d'eau et les corps étrangers, ces manchons étant partie constituante d'une carcasse d'ensemble (7) entourant le boîtier du système (2), cette carcasse présentant en son fond des ouvertures de drainage (17, 17′).

3. Balance de précision à plateau supérieur selon la revendication 1 ou 2, <u>caractérisée en ce que</u> les ouvertures de drainage (17) sont placées sur le bord extérieur du fond (13) de la carcasse d'ensemble (7).

4. Balance de précision à plateau supérieur selon la revendication 1 ou 2, <u>caractérisée en ce que</u> les ouvertures de drainage (17′) sont placées directement en dessous des manchons (12) et des coussinets de logement (9) du plateau (11) de balance.

5. Balance de précision à plateau supérieur selon l'une des revendications 1 à 4, <u>caractérisée en ce que</u> le couvercle (15) de la carcasse d'ensemble (7) s'abaisse en oblique vers la périphérie.

6. Balance de précision à plateau supérieur selon l'une des revendications 1 à 5, <u>caractérisée en ce que</u> le plateau (11) de balance a la forme d'une plaque, qu'il est en prise par l'intermédiaire d'au moins trois pièces intermédiaires (10) en forme de goujon contre les coussinets de logement (9) du support (3, 8) du plateau de balance ou s'appuie par l'intermédiaire d'au moins trois coussinets de logement (9′) sur les pièces intermédiaires (10) en forme de goujon du support (3, 8) de plateau de balance.

7. Balance de précision à plateau supérieur selon l'une des revendications 1 à 6, <u>caractérisée en ce que</u> les manchons (12) sont partie constituante du couvercle (15) de carcasse et des parois latérales (14), en formant une seule pièce (12, 14, 15) en matière synthétique moulée par injection, dont les parois latérales (14) s'appuient sur la plaque de base (13).

## Fig. 1

## Fig. 2